# EUROPÄISCHE PATENTSCHRIFT

(11) **EP 2 111 512 B1**
(45) Veröffentlichungstag und Bekanntmachung des Hinweises auf die Patenterteilung: **23.02.2011**
(21) Anmeldenummer: 07821364.2
(22) Anmeldetag: 16.10.2007
(51) Int. Cl.: F16D 48/02, F16D 48/06

(54) **KUPPLUNGSSYSTEM UND VERFAHREN ZUR STEUERUNG EINES KUPPLUNGSSYSTEMS**
COUPLING SYSTEM AND METHOD FOR CONTROLLING A COUPLING SYSTEM
SYSTÈME D'EMBRAYAGE ET PROCÉDÉ DE COMMANDE D'UN SYSTÈME D'EMBRAYAGE

(30) Priorität: 19.01.2007 DE 102007003902
(43) Veröffentlichungstag der Anmeldung: 28.10.2009
(73) Patentinhaber: Robert Bosch GmbH, 70442 Stuttgart (DE)
(72) Erfinder: SCHULER, Ralf, 73728 Esslingen (DE); WEBER, Werner, 71665 Vaihingen (DE); SCHMOLL GENANNT EISENWERTH, Kaspar, 74343 Sachsenheim (DE); BAWIDAMANN, Alexander, 70176 Stuttgart (DE)
(86) Internationale Anmeldenummer: PCT/EP2007/060997
(87) Internationale Veröffentlichungsnummer: WO 2008/086906

(56) Entgegenhaltungen:
- EP-A- 1 681 487
- WO-A-89/03318

## Beschreibung

### Stand der Technik

Die Erfindung geht aus von einem Verfahren zur Steuerung eines Kupplungssystems nach der Gattung des Hauptanspruchs.

Ein Kupplungssystem ist beispielsweise bekannt aus: Bosch, Kraftfahrtechnisches Taschenbuch, 23. Auflage, Braunschweig; Wiesbaden: Vieweg, 1999, Seite 590f. Das dort dargestellte automatisierte Kupplungssystemen weist beispielsweise eine Kupplung mit einer hydraulischen Betätigungseinheit zum Verbinden und Trennen eines Kraftübertragungspfades zwischen einer Kupplungseingangseite und einer Kupplungsausgangsseite, eine hydraulische Verbindung zwischen der Betätigungseinheit und einem elektrohydraulischen Aktuator sowie eine Steuereinheit zur Ansteuerung des Aktuators auf. Bei diesen Systemen ist es notwendig, den Weg an der Betätigungseinheit der Kupplung beziehungsweise am Ausrücker zu kennen, um das Reibmoment an der Kupplung möglichst genau steuern zu können. Zur Ansteuerung der hydraulischen Betätigungseinheit der Kupplung wird bei derartigen Systemen ein elektrohydraulischer Aktuator verwandt. Die bekannten Vorrichtungen weisen in machen Fällen Sensoren zur Erfassung des Verstellweges eines verstellbaren Kupplungsteils der Betätigungseinheit auf, die in aufwendiger Weise in die Kupplung integriert werden.

Aus Kosten- und Bauraumgründen gibt es jedoch auch Anwendungen, die keine Sensoren an der Betätigungseinheit aufweisen. Die Verstellung des verstellbaren Kupplungsteils wird dann indirekt mittels des elektrohydraulischen Aktuators erfasst. Der Aktuator besitzt hierfür ein um einen vorgebbaren Stellweg verstellbares Aktuatorstellglied und einen absoluten oder einen inkrementellen Wegaufnehmer am Aktuator, dessen Null-Position beispielsweise durch einen mechanischen Anschlag des Aktuatorstellgliedes festgelegt wird. Derartige Systeme setzen voraus, dass das Hydraulikfluid in der hydraulischen Verbindung und den daran angeschlossenen hydraulischen Komponenten des Aktuators und der Bestätigungseinheit nicht kompressibel ist und dass keine Leckage auftritt. Unter diesen idealen Voraussetzungen wird davon ausgegangen, dass der Weg den das Aktuatorstellglied zurücklegt direkt dem Weg proportional ist, den das zum Verbinden und Trennen eines

Kraftübertragungspfades zwischen der Kupplungseingangseite und der Kupplungsausgangsseite verstellbare Kupplungsteil zurücklegt. Das Verhältnis zwischen dem Stellweg des Aktuatorstellgliedes und dem Verstellweg des Kupplungsteils wird als hydraulische Übersetzung bezeichnet.

EP 1 681 487 A offenbart ein hydraulische Kupplungseinrichtung für ein Kraftfahrzeug, mit einem dem Kupplungspedal zugeordneten Geberzylinder und einem die Kupplung beaufschlagenden Nehmerzylinder, wobei Geber- und Nehmerzylinder in einer zwischen Kupplungspedal und Kupplung verlaufenden Hydraulikleitung integriert sind, sowie mit einer in der Hydraulikleitung angeordneten Einrichtung zur Steuerung bzw. Begrenzung des Volumenstromes der Hydraulikflüssigkeit, wobei als Anfahrhilfe in der Hydraulikleitung ein Steuerventil vorgesehen ist, mit dem der Einrückvorgang der Kupplung steuerbar ist.

WO 89/03318 A zeigt ebenfalls eine hydraulische Kupplungseinrichtung für ein Kraftfahrzeug mit Drucksensoren in den zu dem Geber- bzw. Nehmerzylinder führenden Hydraulikleitungen.

### Offenbarung der Erfindung

### Vorteile der Erfindung

Es hat sich gezeigt, dass bei den aus dem Stand der Technik bekannten Kupplungssystemen Störungen, wie beispielsweise Leckagen, Lufteinschlüsse, Elastizitätsänderungen oder Temperaturschwankungen und andere Einflüsse auf die hydraulische Verbindung zwischen der Wegerfassung im Aktuator und der hydraulischen Betätigungseinheit der Kupplung dazu führen können, dass die indirekt mittels der Wegerfassung des Aktuatorstellgliedes erfasste Lage des verstellbaren Kupplungsteiles nicht der tatsächlichen Position des Kupplungsteiles entspricht Dies kann zur Folge haben, dass an dem verstellbaren Kupplungsteil der hydraulischen Betätigungseinheit der Kupplung nicht derjenige Weg eingestellt wird, der zum Öffnen oder Schließen der Kupplung erforderlich ist, wodurch eine Kupplung beispielsweise öfter als nötig schleift und schnell zerstört werden kann. Außerdem kann die Kupplung durch zu große Ausrückwege beschädigt werden.

Bei dem erfindungsgemäßen Verfahren zur Steuerung eines Kupplungssystems mit den Merkmalen des unabhängigen Anspruchs 1 ist es möglich, diese Nachteile zu vermeiden. Hierzu ist vorgesehen, dass die Betätigungseinheit der Kupplung einen die Verstellung des Kupplungsteiles begrenzenden mechanischen Anschlag aufweist. Außerdem sind Mittel vorgesehen, die den Druck in dem hydraulischen system oder ein Ansteuersignal des Aktuators, beispielsweise den Strom durch einen Elektromotor des elektrohydraulischen Aktuators, überwachen und eine Anlage des Kupplungsteiles an dem Anschlag aufgrund einer dann auftretenden charakteristische Änderung des Druckes in dem hydraulischen System oder des Ansteuersignals erfassen. Die Erfassung der Anlage des Kupplungsteiles am Anschlag erfolgt dabei beispielsweise mittels eines Drucksensors, der vorzugsweise am Aktuator angeordnet ist, oder durch die Auswertung des Stromes an einem Elektromotor des elektrohydraulischen Aktuators. Die dafür benötigten Sensoren und/oder Auswertemittel können vorteilhaft entfernt von der Kupplung an einem Ort angeordnet werden, wo sie weniger Aufwand verursachen. Auf kostspielige Sensoren an der Betätigungseinheit kann somit verzichtet werden. Dies ist von großen Vorteil, da an der Betätigungseinheit der Kupplung für Sensoren kritische Umgebungsbedingungen vorliegen und dort durch Sensoren wertvoller Bauraum verloren geht. Durch die Erkennung der Anlage des Kupplungsteils an einem definierten Anschlag erfolgt vorteilhaft eine Plausibilisierung des Kupplungszustandes in der Steuereinheit des Aktuators unter Ausschluss der Fehlereinflüsse in der hydraulischen Verbindung. Die dadurch gewonnene Information wird in der Steuereinheit vorteilhaft zur Anpassung der Steuerung für die zukünftige Ansteuerung des Aktuators oder zur Erzeugung eines Diagnosesignals verwandt.

Vorteilhafte Ausbildungen und Weiterentwicklungen der Erfindung werden durch die in den abhängigen Ansprüchen angegebenen Maßnahmen ermöglicht.

Es ist vorteilhaft, wenn der elektrohydraulische Aktuator ein um einen vorgebbaren Stellweg verstellbares Aktuatorstellglied aufweist, und Mittel vorgesehen sind, die den Stellweg des Aktuatorstellgliedes erfassen und der Steuereinheit übermitteln. Der über Drucksensoren erfasste Druck in dem hydraulischen System oder auch der erfasste Stromwert durch einen Elektromotor des Aktuators steigen beim Anfahren des Anschlages stark an. Der Stellweg des Aktuatorstellgliedes, bei dem dieser Anstieg erfolgt, gibt die Position des Anschlages unter allen Systemeinflüssen, wie den Elastizitäten in der hydraulischen Verbindung und Anschlusstücken und Dichtungen wieder und kann bei der nächsten Kupplungsbetätigung für die Wegvorgabe am Aktuator und damit für eine sichere Kupplungsbestätigung verwendet werden.

Die Steuereinheit kann einen Speicher aufweisen, in dem ein Zusammenhang zwischen der Kupplungsbetätigung und dem Stellweg des Aktuatorstellgliedes hinterlegt ist, der zur Ansteuerung des Aktuators verwandt wird. Dieser Zusammenhang kann beispielsweise eine in dem Speicher hinterlegte Kennlinie sein. Die in der Steuereinheit erfasste Anlage des Kupplungsteiles an dem Anschlag wird dann besonders vorteilhaft zur Anpassung des Zusammenhangs zwischen der Kupplungsbetätigung und dem Stellweg des Aktuatorstellgliedes in der Steuereinheit verwandt. Der Zusammenhang zwischen der Kupplungsbetätigung und dem Stellweg des Aktuatorstellgliedes kann beispielsweise ein Zusammenhang zwischen dem Druck in dem hydraulischen System oder einer dadurch beeinflussten Größe und dem Stellweg des Aktuatorstellgliedes des Aktuators sein.

Weiterhin ist es vorteilhaft, dass Mittel vorgesehen sind, die bei einer erfassten Anlage des Kupplungsteiles an dem Anschlag den dann vorliegenden Wert für den Stellweg des Aktuatorstellgliedes oder eine daraus abgeleitete Größe mit wenigstens einem Schwellwert vergleichen und bei Überschreiten des wenigstens einen Schwellwertes ein Fehlersignal als Diagnosesignal erzeugen. Dieser Ausbildung der Erfindung liegt der Gedanke zugrunde, dass ein schwerer Fehler im Kupplungssystem (beispielsweise große Mengen eingeschlossener Luft) vorliegt, wenn die Anlage des Kupplungsteiles bei einer Stellwegposition des Aktuatorstellgliedes erfasst wird, die außerhalb eines vorgegebenen sicheren Bereichs liegt. Die Ermittlung des Anlagepunktes kann somit auch zu Diagnosezwecken verwendet werden.

Besonders vorteilhaft ist es, wenn der mechanische Anschlag an der Betätigungseinheit der Kupplung so ausgebildet ist, dass die Verstellung des Kupplungsteiles beim Öffnen der Kupplung und einer Unterbrechung des Kraftflusses zwischen der Kupplungseingangsseite und der Kupplungsausgangsseite begrenzt wird. Hierdurch wird vorteilhaft erreicht, dass das Kupplungsteil an den Anschlag gelangt, wenn sich die Kupplung in der definierten Position "Kupplung sicher offen" befindet.

### Kurze Beschreibung der Zeichnungen

Ein Ausführungsbeispiel der Erfindung ist in den Zeichnungen dargestellt und wird in der nachfolgenden Beschreibung näher erläutert. Es zeigt
- Figur 1: schematisch einen Gesamtaufbau eines erfindungsgemäßen Kupplungssystems,
- Figur 2: eine vergrößerte Ansicht des elektrohydraulischen Aktuators,
- Figur 3: eine vergrößerte Detailansicht der hydraulischen Betätigungseinheit der Kupplung,
- Figur 4: einen Zusammenhang zwischen der Kupplungsbetätigung und dem Stellweg des Aktua- torstellgliedes.

### Ausführungsformen der Erfindung

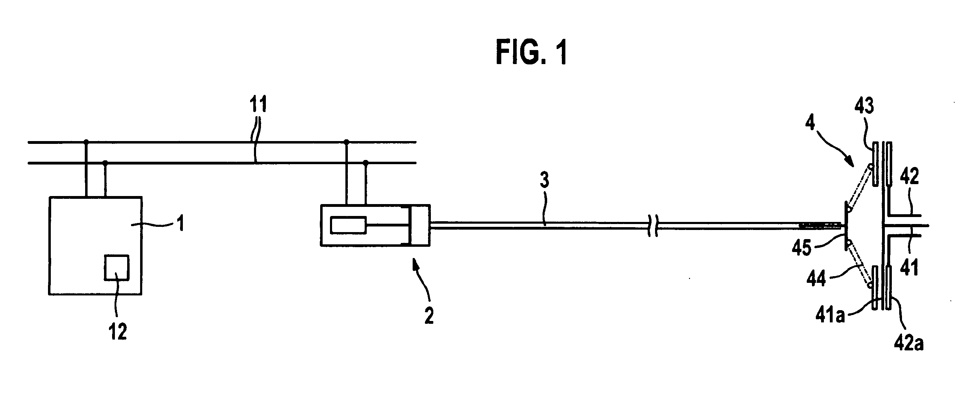

In der Figur 1 ist ein automatisiertes Kupplungssystem schematisch dargestellt. Das Kupplungssystem umfasst eine Steuereinheit 1, die beispielsweise in einem Steuergerät angeordnet ist und über einen Datenbus 11, beispielsweise einen CAN-Bus mit einem elektrohydraulischen Aktuator 2 elektrisch verbunden ist. Der hydraulische Anschluss des elektrohydraulischen Aktuators ist über eine hydraulische Verbindung 3 mit einer Kupplung 4 verbunden.

Die Kupplung 4 weist eine Kupplungseingangsseite 42 und eine Kupplungsausgangsseite 41 auf, die zum Verbinden und Trennen eines Kraftübertragttngspfades miteinander koppelbar sind. Hierzu weist die Kupplung eine hydraulische Betätigungseinheit auf, die ein Ausrücklage 45 beaufschlagt, das beispielsweise über eine Kupplungsfeder 44 mit einer Druckplatte 43 verbunden ist. Die Druckplatte 43 wird durch die Kupplungsfeder 44 an die Kupplungsscheibe 41a angedrückt und diese an die Schwungscheibe 42a, wodurch die Kupplungseingangsseite 42 (Eingangswelle) mit der Kupplungsausgangsseite 41 (Ausgangswelle) mechanisch verbunden wird. Der Aufbau der hier dargestellten Kupplung ist nur beispielhaft und kann auch anders vorgenommen werden. Die Kupplung ist vorzugsweise als Trennkupplung in einem automatisierten hydraulischen Kupplungssystem, vorzugsweise in einem Kraftfahrzeug und insbesondere in einem Kraftfahrzeug mit Hybridantrieb einsetzbar, um eine drehbewegliche Eingangswelle mit einer drehbeweglichen Ausgangswelle zu verbinden.

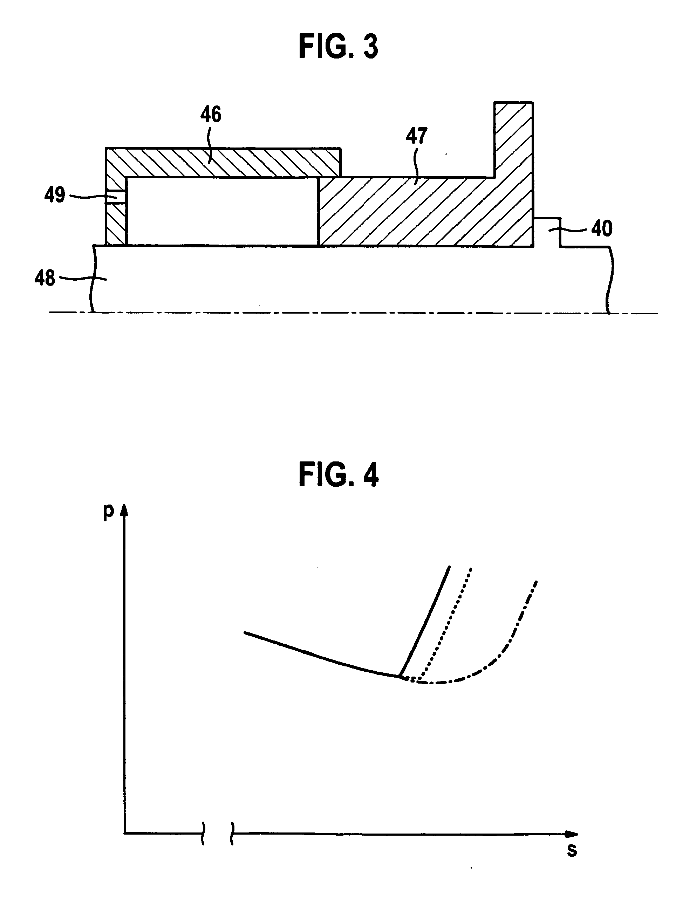

Die Kupplung 4 weist eine hydraulische Betätigungseinheit auf, die in Fig. 3 detaillierter dargestellt ist. Die Betätigungseinheit umfasst einen hydraulischen Nehmerzylinder 46, der auf einer Welle 48 gelagert ist und ein Kupplungsteil 47 beaufschlagt, das auf der Welle 48 verschiebbar gelagert ist und mit dem Ausrücklager 45 verbunden ist. Über einen Anschluss 49 ist der Nehmerzylinder 46 an die hydraulische Verbindung 3 angeschlossen und mit einem Hydraulikfluid befüllbar. Der hydraulische Druck im Nehmerzylinder 46 erzeugt eine Kraft auf das Kupplungsteil 47, das sich hierdurch auf der Welle 48 verschiebt und das Ausrücklager 45 der Kupplung in Fig. 1 betätigt. Wie in Figur 3 zu erkennen ist, ist an der Welle 48 ein Anschlag 40 vorgesehen, der den maximalen Verstellweg des Kupplungsteiles 47 begrenzt, wodurch unter anderem sichergestellt wird, dass das Kupplungsteil 47 nicht zu stark aus dem Nehmerzylinder 46 ausgerückt wird. In dem hier dargestellten bevorzugten Ausführungsbeispiel ist der Anschlag 40 so ausgebildet, dass die Kupplung sicher offen steht und der Kraftübertragungspfad unterbrochen ist, wenn das Kupplungsteil 47 an dem Anschlag 40 anliegt. Durch die beschriebene Maßnahme wird erreicht, dass durch Anlage des Kupplungsteils 47 an dem Anschlag 40 ein Verstellweg angefahren werden kann, bei dem die Kupplung einen definierten Zustand einnimmt, der beispielsweise der Zustand "sicher offen" sein kann. Es ist aber prinzipiell auch möglich, das der Anschlag 40 so ausgebildet ist, dass die Kupplung einen anderen definierten Zustand einnimmt.

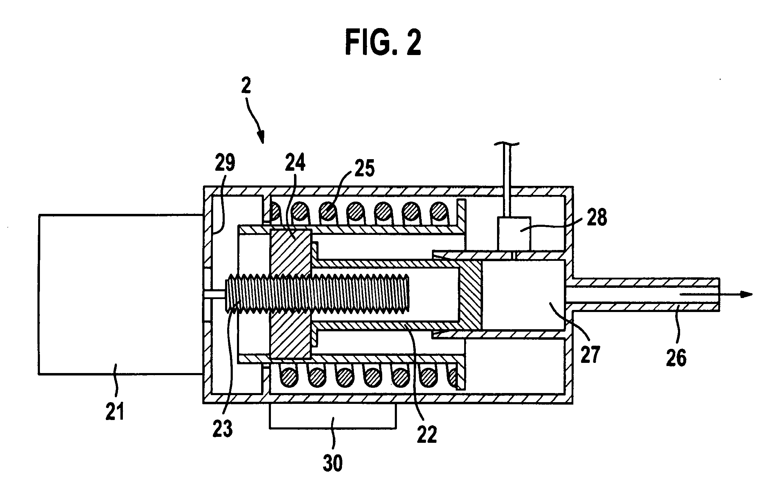

Das nicht mit der Kupplung 4 verbundene Ende der hydraulischen Verbindung 3 ist mit einem elektrohydraulischen Aktuator 2 mit Wegerkennung und Drucksensorik verbunden. Ein solcher Aktuator ist beispielhaft in Figur 2 dargestellt. Der Aktuator umfasst einen Elektromotor 21, der mittels der Steuereinheit 1 ansteuerbar ist. Der Elektromotor 21 treibt beispielsweise eine Spindel 23 mit Schraubengewinde an, wobei die Spindel 23 ein Aktuatorstellglied 24 verstellt, das als Läufer mit Innengewinde auf der Spindel 23 angeordnet ist. Das Aktuatorstellglied 24 kann zusätzlich durch die Kraft einer Feder 25 beaufschlagt sein und wirkt auf einen Hydraulikkolben 22, der in einem Geberzylinder 27 gelagert ist. Durch eine Betätigung des Elektromotors 21 kann der Druck im Geberzylinder 27 angehoben oder gesenkt werden. Der Geberzylinder 27 ist über einen Anschluss 26 an die hydraulische Verbindung 3 angeschlossen. Der in Fig. 2 dargestellte Aktuator weist weiterhin eine Wegerkennung 30 zur Erkennung des Stellweges des Aktuatorstellglied 24 auf, die beispielsweise über den CAN-Bus mit der Steuereinheit 1 verbunden ist. Für das Aktuatorstellglied 24 ist in dem Aktuator ein Anschlag 29 ausgebildet. Durch Anlage des Aktuatorstellgliedes 24 an dem Anschlag 29 ist die Nullposition des Stellweges des Aktuatorstellgliedes 24 erfassbar. Mittels der in Fig. 1 dargestellten Steuereinheit und der Wegerkennung ist somit einer definierter Stellweg am Aktuator 2 vorgebbar.

Die hydraulischen Komponenten des Aktuators 2 und der Betätigungseinheit der Kupplung, also der Geberzylinder 27 des Aktuators und der Nehmerzylinder 46 der Kupplung bilden zusammen mit der hydraulischen Verbindung 3 ein hydraulisches System. Eine Verstellung des Aktuatorstellgliedes 24 bewirkt über die hydraulische Übersetzung des hydraulischen Systems eine Verstellung des Kupplungsteiles 47 der Betätigungseinheit der Kupplung 4. Die Verstellung des Kupplungsteiles 47 ist dabei abhängig von der hydraulischen Übersetzung zwischen der Betätigungseinheit der Kupplung und dem Stellweg des Aktuatorstellgliedes. Die Steuereinheit 1 enthält einen Speicher 12, in dem beispielsweise ein Zusammenhang zwischen der Kupplungsbetätigung und dem Stellweg des Aktuatorstellgliedes als Kennlinie hinterlegt ist. Ein derartiger Zusammenhang ist beispielsweise in Figur 4 dargestellt. Bei dem in Figur 4 dargestellten Diagramm ist auf der y-Achse der Druck p in dem hydraulischen System aufgetragen und auf der x-Achse der Stellweg s des Aktuatorstellgliedes. Die Steuereinheit 1 ermittelt aus der Kennlinie (durchgezogene Linie in Figur 4) den Stellweg s des Aktuatorstellgliedes, der am Aktuator eingestellt werden muss, damit die Kupplung einen von dem Druck p im hydraulischen System abhängigen gewünschten Zustand einnimmt. Wie in Figur 4 zu erkennen ist, sinkt der Druck p in diesem beispielhaften Fall bei einer Vergrößerung des Stellweges s des Aktuatorstellgliedes ab, bis das Kupplungsteils 47 an den mechanischen Anschlag 40 gelangt. Bis zu diesem Punkt ist der Druckverlauf durch die Eigenschaften der in der Kupplung verbauten Tellerfeder vorgegeben. Sobald das Kupplungsteil 47 den Anschlag 40 erreicht, steigt der Druck p bei größeren Stellweg s sprunghaft an.

Bei nicht idealen und sich ändernden Systemeigenschaften, beispielsweise Leckagen oder Lufteinschlüssen in dem hydraulischen System, ist die Verstellung des Kupplungsteiles 47 nicht mehr direkt proportional zum Stellweg des Aktuatorstellgliedes 24. So hat beispielsweise eine Leckage eine ständig steigende hydraulische Wegübersetzung zur Folge. Dadurch verschiebt sich der Zusammenhang zwischen dem hydraulischen Druck und dem Stellweg des Aktuatorstellgliedes. Dies ist in Figur 4 durch die punktierte Linie dargestellt. Es ist dort auch erkennbar, dass ohne den durch die Anlage des Kupplungsteiles an dem Anschlag hervorgerufenen Knick in der Kennlinie, der durchgezogen dargestellte ursprünglich vorgegebene Verlauf nicht von dem punktiert dargestellten tatsächlichen Verlauf zu unterscheiden wäre. Durch Lufteinschlüsse im System verschiebt sich der in Figur 4 dargestellte Kurvenverlauf entsprechend der strickpunktierten Linie. In diesem Fall verschiebt sich nicht nur der Verlauf, sondern die Linie weist auch einen weicheren, langsamer ansteigenden Verlauf auf.

Über die im Aktuator vorhandene Wegerkennung 30 kann daher nur nach einer Plausibilisierung eine verlässliche Aussage über die Verstellung des Kupplungsteiles 47 und damit über die Kupplungsbetätigung gemacht werden. Hierzu wird in regelmäßigen Abständen oder auch unregelmäßig das Kupplungsteil 47 mittels einer entsprechenden Ansteuerung des Aktuators 2 an den Anschlag 40 gestellt. Dies erfolgt vorzugsweise dann, wenn die Kupplung offen ist, wenn also der Kraftübertragungspfad zwischen der Eingangsseite und der Ausgangsseite unterbrochen ist. Der elektrohydraulische Aktuator 2 kann beispielsweise einen Drucksensor 28 aufweisen, mit dem der Druck in dem hydraulischen System überwacht wird. Es ist besonders vorteilhaft den Drucksensor am Aktuator auszubilden. Jedoch kann dieser auch an der hydraulischen Verbindung 3 oder einer damit verbundenen Hydraulikkomponente angeordnet sein. Der von dem Drucksensor 28 erfasste Druck wird der Steuereinheit 1 übermittel, die Auswertemittel aufweist, welche anhand der charakteristischen Änderung des Drucks (der Druck beginnt steil anzusteigen) erkennen, dass das Kupplungsteils 47 den Anschlag erreicht. Gleichzeitig liegt in der Steuereinheit über die Wegerkennung eine Information über den augenblicklichen Stellweg des Aktuatorstellgliedes 24 zu diesem Zeitpunkt vor. Mittels der in der Steuereinheit 1 vorliegenden Information kann diese beispielsweise den abgespeicherten Druck-Stellweg-Verlauf mit dem tatsächlichen über die Wegerkennung 30 und den Drucksensor 28 erfassten Druck-Stellweg-Verlauf vergleichen und eine Abweichung feststellen (Plausibilisierung). Falls eine Abweichung auftritt, kann dann beispielsweise die zur Ansteuerung des Aktuators verwandte Kennlinie entsprechen den tatsächlichen Werten korrigiert werden. Hierdurch wird erreicht, dass die Kupplung bei zukünftigen Betätigungen mittels einer Ansteuerung des Aktuators 2 in definierte Zustände einstellbar ist, da die korrigierte Kennlinie an die sich ändernde hydraulische Wegübersetzung angepasst wurde.

In einem weiteren Ausführungsbeispiel kann aber auch vorgesehen sein, dass anstelle des Drucks des hydraulischen Systems ein Ansteuersignal des Aktuators überwacht wird. Beispielsweise kann die Stromstärke durch den Elektromotor 21 des Aktuators 2 überwacht wird, indem am Aktuator oder in der Steuereinheit hierfür geeignete Mittel vorgesehen sind. Bei Anlage des Kupplungsteils 47 an dem Anschlag 40 ergibt sich dann ein charakteristischer Anstieg des Stromes, aufgrund dessen die Steuereinheit 1 den Anlagepunkt des Kupplungsteils detektiert.

In einem weiteren Ausführungsbeispiel ist vorgesehen, die Erfassung des Anlagepunktes des Kupplungsteiles zu Diagnosezwecken während des Kupplungsbetriebes zu verwenden. So kann die Steuereinheit beispielsweise den bei Anlage des Kupplungsteils 47 am Anschlag 40 erfassten Stellweg des Aktuatorstellgliedes mit einem Schwellwert vergleichen und bei einem Überschreiten ein Fehlersignal erzeugen, das beispielsweise dem Fahrer des Kraftfahrzeuges angezeigt wird. Natürlich kann auch jede aus dem bei Anlage des Kupplungsteils am Anschlag erfassten Stellweg des Aktuatorstellgliedes abgeleitete Größe verwandt werden. So kann beispielsweise die Differenz aus dem bei Anlage des Kupplungsteils erfassten Stellweg des Aktuators und dem ursprünglich für diesen Kupplungszustand gespeicherten Stellweg des Aktuators mit einem Schwellwert verglichen werden oder auch der erfasste Druck-Stellweg-Verlauf mit einem gespeicherten Druck-Stellweg-Verlauf verglichen werden und bei einer zu großen Abweichung ein Fehlersignal erzeugt werden.

Durch eine genau Auswertung des in Figur 4 dargestellten Druck-Stellweg-Verlaufs oder eines Stromstärke-Stellweg-Verlaufs in der Steuereinheit 1 kann auch ein Diagnosesignal generiert werden, das angibt, ob eine Leckage in der hydraulischen Verbindung oder Lufteinschlüsse aufgetreten sind.

## Patentansprüche

1. Verfahren zur Steuerung eines Kupplungssystems umfassend eine Kupplung (4) mit einer ein verstellbares Kupplungsteil (47) aufweisenden hydraulischen Betätigungseinheit zum Verbinden und Trennen eines Kraftübertragungspfades zwischen einer Kupplungseingangseite und einer Kupplungsausgangsseite, eine hydraulische Verbindung (3), welche die Betätigungseinheit mit einem außerhalb der Kupplung angeordneten elektrohydraulischen Aktuator (2) verbindet, und eine Steuereinheit (1) zur Ansteuerung des Aktuators (2), wobei die hydraulische Verbindung (3) zusammen mit hydraulischen Komponenten der Betätigungseinheit und des Aktuators ein hydraulisches System bildet und die Betätigungseinheit einen die Verstellung des Kupplungsteiles (47) begrenzenden mechanischen Anschlag (40) aufweist und der Druck in dem hydraulischen System oder ein Ansteuersignal des Aktuators (2) überwacht wird, **dadurch gekennzeichnet, dass** der elektrohydraulische Aktuator (2) ein um einen vorgebbaren Stellweg (s) verstellbares Aktuatorstellglied (24) aufweist und dass der Stellweg des Aktuatorstellgliedes erfasst und der Steuereinheit (1) übermittelt wird, wobei eine Anlage des Kupplungsteiles (47) an dem Anschlag aufgrund einer dann auftretenden charakteristischen Änderung des Druckes in dem hydraulischen System oder des Ansteuersignals erfasst wird und in Abhängigkeit davon der elektrohydraulische Aktuator (2) angesteuert wird und/oder ein Diagnosesignal erzeugt wird, wobei bei einer erfassten Anlage des Kupplungsteiles (47) an dem Anschlag (40) der dann vorliegende Wert für den Stellweg (s) des Aktuatorstellgliedes (24) oder für eine daraus abgeleitete Größe mit wenigstens einem Schwellwert verglichen und bei Überschreiten des wenigstens einen Schwellwertes ein Fehlersignal erzeugt wird.

2. Verfahren nach Anspruch 1, **dadurch gekennzeichnet, dass** die Steuereinheit (1) einen Speicher (12) aufweist, in dem ein Zusammenhang zwischen der Kupplungsbetätigung und dem Stellweg (s) des Aktuatorstellgliedes (24) hinterlegt ist, der zur Ansteuerung des Aktuators (2) verwandt wird, und dass die erfasste Anlage des Kupplungsteiles (47) an dem Anschlag (40) in der Steuereinheit (1) zur Anpassung des Zusammenhangs zwischen der Kupplungsbetätigung und dem Stellweg des Aktuatorstellgliedes verwandt wird.

3. Verfahren nach Anspruch 2, **dadurch gekennzeichnet, dass** der Zusammenhang zwischen der Kupplungsbetätigung und dem Stellweg des Aktuatorstellgliedes ein Zusammenhang zwischen dem Druck (p) in dem hydraulischen System oder dem Ansteuersignal des Aktuators und dem Stellweg (s) des Aktuatorstellgliedes ist.

4. Verfahren nach einem der Ansprüche 1 bis 3, **dadurch gekennzeichnet, dass** das Ansteuersignal ein Stromsignal für eine elektrischen Antriebseinheit (21) des elektrohydraulischen Aktuators (2) ist.

5. Verfahren nach einem der Ansprüche 1 bis 4, **dadurch gekennzeichnet, dass** der mechanische Anschlag (40) der Betätigungseinheit die Verstellung des Kupplungsteiles (47) beim Öffnen der Kupplung und einer Unterbrechung des Kraftflusses zwischen der Kupplungseingangsseite und der Kupplungsausgangsseite begrenzt.

## Claims

1. Method for controlling a clutch system comprising a clutch (4) with a hydraulic actuating unit which has an adjustable clutch part (47) and which serves for connecting and separating a force-transmission path between a clutch input side and a clutch output side, a hydraulic connection (3) which connects the actuating unit to an electrohydraulic actuator (2) arranged outside the clutch, and a control unit (1) for activating the actuator (2), with the hydraulic connection (3) forming a hydraulic system together with hydraulic components of the actuating unit and of the actuator, and with the actuating unit having a mechanical stop (40) which limits the adjustment of the clutch part (47), and with the pressure in the hydraulic system or an activation signal of the actuator (2) being monitored, **characterized in that** the electrohydraulic actuator (2) has an actuator position member (24) which can be adjusted by a predefinable adjustment travel (s), and **in that** the adjustment travel of the actuator position member is measured and transmitted to the control unit (1), with an abutment of the clutch part (47) against the stop on account of an occurring characteristic change of the pressure in the hydraulic system or of the activation signal being detected and with the electrohydraulic actuator (2) being activated, and/or a diagnostic signal being generated, as a function thereof, wherein in the event of an abutment of the clutch part (47) against the stop (40) being detected, the present value for the adjustment travel (s) of the actuator position member (24) or for a variable derived therefrom is compared with at least one threshold value, and an error signal is generated if the at least one threshold value is exceeded.

2. Method according to Claim 1, **characterized in that** the control unit (1) has a memory (12) in which is stored a relationship between the clutch actuation and the adjustment travel (s), which is used for the activation of the actuator (2), of the actuator position member (24), and **in that** the detected abutment of the clutch part (47) against the stop (40) is used, in the control unit (1), for adapting the relationship between the clutch actuation and the adjustment travel of the actuator position member.

3. Method according to Claim 2, **characterized in that** the relationship between the clutch actuation and the adjustment travel of the actuator position member is a relationship between the pressure (p) in the hydraulic system or the activation signal of the actuator and the adjustment travel (s) of the actuator position member.

4. Method according to one of Claims 1 to 3, **characterized in that** the activation signal is a current signal for an electrical drive unit (21) of the electrohydraulic actuator (2).

5. Method according to one of Claims 1 to 4, **characterized in that** the mechanical stop (40) of the actuating unit limits the adjustment of the clutch part (47) during the opening of the clutch and an interruption in the power flow between the clutch input side and the clutch output side.

## Revendications

1. Procédé de commande d'un système d'embrayage comprenant un embrayage (4) avec une unité d'actionnement hydraulique présentant une partie d'embrayage réglable (47) pour connecter et séparer une voie de transmission de force entre un côté d'entrée d'embrayage et un côté de sortie d'embrayage, une connexion hydraulique (3), qui relie l'unité d'actionnement à un actionneur électrohydraulique (2) disposé en dehors de l'embrayage, et une unité de commande (1) pour commander l'actionneur (2), la connexion hydraulique (3) formant un système hydraulique conjointement avec des composants hydrauliques de l'unité d'actionnement et de l'actionneur, et l'unité d'actionnement présentant une butée mécanique (40) limitant le déplacement de la partie d'embrayage (47), et la pression dans le système hydraulique ou un signal de commande de l'actionneur (2) étant contrôlés, **caractérisé en ce que** l'actionneur électrohydraulique (2) présente un organe de réglage d'actionneur (24) pouvant être déplacé d'une course de réglage prédéfinissable (s), et **en ce que** la course de réglage de l'organe de réglage d'actionneur est détectée et est communiquée à l'unité de commande (1), une venue en appui de la partie d'embrayage (47) contre la butée, du fait d'une variation caractéristique, se produisant alors, de la pression dans le système hydraulique ou du signal de commande étant détectée et en fonction ce celle-ci, l'actionneur électrohydraulique (2) étant commandé et/ou un signal de diagnostic étant produit, la valeur alors présente pour la course de réglage (s) de l'organe de réglage d'actionneur (24) ou pour une grandeur dérivée de celle-ci, étant comparée à au moins une valeur seuil dans le cas d'une détection d'une venue en appui de la partie d'embrayage (47) contre la butée (40), et un signal d'erreur étant produit dans le cas d'un dépassement de l'au moins une valeur seuil.

2. Procédé selon la revendication 1, **caractérisé en ce que** l'unité de commande (1) présente une mémoire (12) dans laquelle est consigné un rapport entre l'actionnement de l'embrayage et la course de réglage (s) de l'organe de réglage d'actionneur (24), qui est utilisé pour commander l'actionneur (2), et **en ce que** la venue en appui détectée de la partie d'embrayage (47) contre la butée (40) est utilisée dans l'unité de commande (1) pour adapter le rapport entre l'actionnement de l'embrayage et la course de réglage de l'organe de réglage d'actionneur.

3. Procédé selon la revendication 2, **caractérisé en ce que** le rapport entre l'actionnement de l'embrayage et la course de réglage de l'organe de réglage d'actionneur est un rapport entre la pression (p) dans le système hydraulique ou entre le signal de commande de l'actionneur et la course de réglage (s) de l'organe de réglage d'actionneur.

4. Procédé selon l'une quelconque des revendications 1 à 3, **caractérisé en ce que** le signal de commande est un signal de courant pour une unité d'entraînement électrique (21) de l'actionneur électrohydraulique (2).

5. Procédé selon l'une quelconque des revendications 1 à 4, **caractérisé en ce que** la butée mécanique (40) de l'unité d'actionnement limite le déplacement de la partie d'embrayage (47) lors de l'ouverture de l'embrayage et d'une interruption du flux de force entre le côté d'entrée de l'embrayage et le côté de sortie de l'embrayage.
